# EUROPEAN PATENT SPECIFICATION

(11) **EP 1 083 518 B1**
(45) Date of publication and mention of the grant of the patent: **14.06.2006**
(21) Application number: 00115968.0
(22) Date of filing: 26.07.2000
(51) Int. Cl.: G06K 19/077, G06K 7/00, G06K 9/00

(54) **IC card with retractable tray**
Ic-Karte mit ausziehbarer Ablage
Carte à puce avec tiroir rétractable

(30) Priority: 10.09.1999 US 393383; 30.05.2000 US 583163
(43) Date of publication of application: 14.03.2001
(73) Proprietor: ITT MANUFACTURING ENTERPRISES, INC., Wilmington, Delaware 19801 (US)
(72) Inventor: Bates, Charles Lindsey III, Laguna Hills, CA 92653 (US)
(74) Representative: Esser, Wolfgang

(56) References cited:
- EP-A- 1 077 399
- WO-A-00/28471
- DE-U- 29 821 644
- US-A- 5 183 404
- US-A- 5 773 332

## Description

### BACKGROUND OF THE INVENTION

A large amount of electronic equipment has slots constructed for receiving PCMCIA cards (Personal Computer Memory Card International Association). The PCMCIA cards have a front connector with 68 contact positions, a width of 54mm, and a specified height. The height is 3.3mm, 5mm and 10.5mm for Type I, Type II and Type III cards, with Type II cards being the most common. It would be convenient if authentication of a person's identity through his fingerprint could be communicated to the electronic equipment through the IC card slot. Since the entire length of an IC card may be received in the slot, a fingerprint sensor has to lie outside the slot. One way is to provide an IC card with a permanent rearward extension that contains a fingerprint sensor. However, the extension and the sensor would be subject to damage as when a piece of equipment hit the extension or if dirt fell onto the sensor. A separate fingerprint sensor could be connected through the I/O connector at the rear end of many IC cards, but this would result in the need to separately store and reconnect the fingerprint sensor. An IC card that facilitated use of a fingerprint sensor while protecting it, would be of value.

DE 29821644 U1 shows a fingerprint sensor or other electronic component in an IC card that can be mounted on a retractable tray that is concealed and protected when the tray is stowed, and easily accessible when the tray is deployed. The tray is electrically connected to the motherboard via a elastic cable that lies in a zig-zag between housing and mother board when the try is stowed and the tray can be deployed from its stowed position by an electrical drive which must be controlled from the electronic device in which the IC card is inserted.. An automatic deployment device such as a double click mechanism that pushes out the tray when the tray is pushed in a second time, is generally desirable together with an arrangement for electrically connecting a plurality of conductors between mother board and tray.

### SUMMARY OF THE INVENTION

The IC card according to claim 1 is provided for substantially full insertion into an IC card slot of electronic equipment, where the IC card holds a fingerprint sensor that can be operated while the IC card lies in the slot and which protects the fingerprint sensor when not in use. The sensor is fixed to a tray that is moveably mounted in the IC card to move rearward out of the rear of the card to a deployed position, and which can be moved back into the card to a stowed position.

An electrical connecting arrangement that connects the component on a moving tray to a mother board on the stationary housing, includes a flat flexible cable having upper and lower cable parts lying in horizontal planes and connected by a 180° bend.

The tray guide is fixed to the housing by lugs that fit into undercut slots. The novel features of the invention are set forth with particularity in the appended claims. The invention will be best understood from the following description when read in conjunction with the accompanying drawings.

### BRIEF DESCRIPTION OF THE DRAWINGS

- Fig. 1: is a rear and top isometric view of an IC card of the present invention shown in a stowed position, and showing, in phantom lines, a piece of electronic equipment with an IC card slot into which the IC card has been fully installed.
- Fig. 2: is a rear and top isometric view of the IC card in Fig. 1, in a deployed configuration.
- Fig. 3: is an exploded isometric view of the IC card of Fig. 1.
- Fig. 4: is a plan view of the IC card of Fig. 1, with the tray shown in its stowed position.
- Fig. 5: is a sectional view taken on line 5-5 of Fig. 4.

- Fig. 6: is a plan view of the IC card of Fig. 4, with the top cover part removed, and with the IC card being in a deployed configuration.
- Fig. 7: is a sectional view of a portion of the IC card of Fig. 3, with the chip card fully installed.
- Fig. 8: is a block diagram view of circuitry of the IC card of Fig. 1.
- Fig. 9: is a rear and top isometric view of an electronic device of a second embodiment of the invention, with the top cover portion removed, and with the tray in a deployed position.
- Fig. 10: is a view similar to that of Fig. 9, but with the tray in a stowed position.
- Fig. 11: is an exploded isometric view of the electronic device of Figs. 9 and 10, including the top cover portion.
- Fig. 12: is a plan view of the tray assembly of Fig. 9 in its deployed position.
- Fig. 13: is a view similar to that of Fig. 12, showing a first side of the housing and showing the tray assembly in the stowed position.
- Fig. 14: is an exploded isometric view of the tray assembly of Fig. 12, but without the spring.
- Fig. 15: is an upside-down exploded isometric view of the tray assembly of Fig. 14.
- Fig. 16: is a partial sectional view taken on line 16-16 of Fig. 13.
- Fig. 17: is an enlarged view of a portion of the upside-down view of Fig. 15, showing the cam element of the double click mechanism thereof.

### DESCRIPTION OF THE PREFERRED EMBODIMENTS

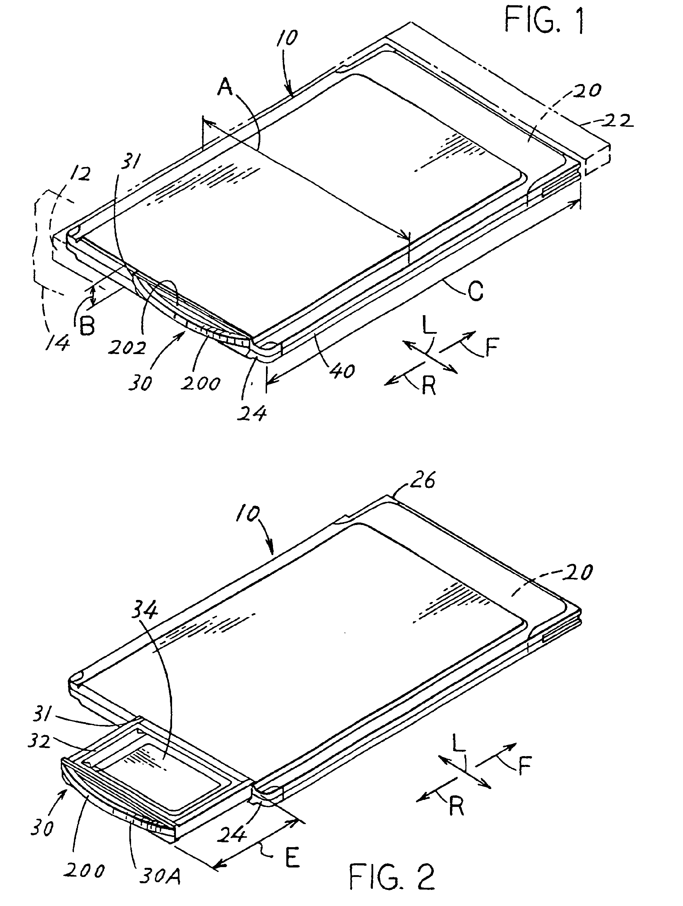

Fig. 1 illustrates an IC card 10 of a first embodiment of the present invention, which is constructed in accordance with PCMCIA standards, to fit into an IC card slot 12 of electronic equipment 14 such as a computer. The IC card slot 12 and IC card 10 are constructed in accordance with PCMCIA standards, which specificy a card width A of 54mm and a card height B for Type II cards of 5 mm. A full-sized IC card has a length C of 85.6mm (there are smaller length cards), while the full-sized slot 12 has a length of about 91mm. The IC card 10 is inserted in a forward direction F into the IC card slot, until a front connector 20 at the front end 26 of the card engages an equipment connector 22 at the front end of the slot. When the IC card is fully inserted, a rear end 24 of its housing 40 lies about 4 or 5mm forward of the rear end of the slot 12, but a tray handle 200 lies only slightly forward of the rear end of the slot. The electronic equipment 14 may have a door that closes the rear of the slot to keep out dirt.

The IC card 10 is designed to authenticate the identity of a user by sensing the fingerprint of the user. The card has a tray 30 that can slide within a slot 31 forwardly to the stowed position shown at 30 in Fig. 1, and that can slide rearwardly to a deployed position shown at 30A in Fig. 2. In the deployed position, a fingerprint sensor device 32 lying on the rear portion of the tray, has its fingerprint receiver or sensor 34 exposed. A person lays his/her finger on the sensor, which senses the person's fingerprint characteristics. An example of a fingerprint sensor 34 is a matrix of perhaps 200 columns and 200 rows of pixels (total of 40,000 pixels) that each can detect contact with a ridge of a person's fingertip. The IC card delivers signals through its front connector 20 to the electronic device, to indicate whether the identity of the person has been authenticated through sensing of his/her fingertip (or other part of the finger).

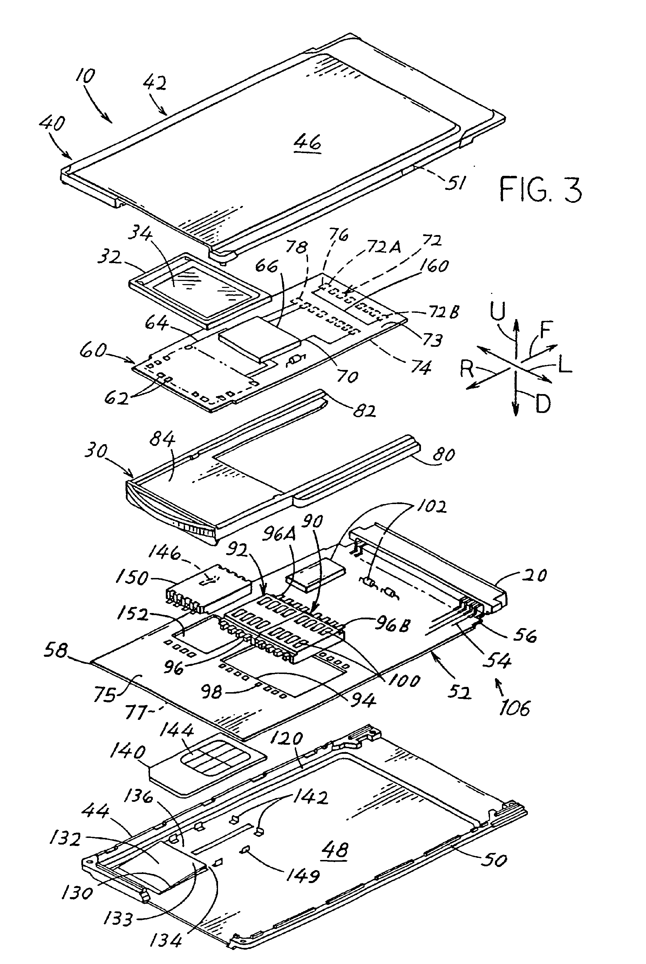

Fig. 3 illustrates details of the IC card. The card includes a card housing 40 formed by top and bottom cover halves 42, 44 spaced in directions U, D. Each cover half includes a sheet metal part 46, 48 and bent sides, and molded-in plastic parts 50, 51 at each of the sides. The cover halves are ultrasonically welded together by welding the plastic pieces of the top and bottom cover halves together. A mother board 52 with top and bottom surfaces 75, 77, lies in the space between the top and bottom sheet metal parts 46, 48 and occupies most of the area of the card as seen in a plan view. The mother board has numerous electrically conductive traces 54 for making connections. The mother board has front and rear ends 56, 58, with the front end 56 connected to contacts of the card front connector 20 by connection of tails of the contacts of the connector 20 to selected traces 54.

A daughter board 60 is fixed to the tray 30, with the fingerprint sensor device 32 being mounted on the daughter board. The sensor device has numerous terminals (not shown) on its lower surface, which are soldered to corresponding terminals 62 at the rear of the daughter board. At least one circuit component 66 (IC chip or other component that significantly modifies signals) is preferably mounted on the daughter board. The daughter board has numerous traces 64 that connect the terminals 62 to the circuit component 66, The contact pads 72 lie on a bottom surface 74 of the daughter board (opposite its top surface 73) at its front end. Fig. 3 shows forward and rearward rows 76, 78 of the contact pads on the lower surface of the daughter board. The tray has a pair of guide arms 80, 82 that extend forwardly from laterally L opposite sides of a rear portion 84 of the tray, with the guide arms helping to guide the tray in sliding movement between its stowed and deployed positions. It would be possible to pivotally mount the tray for deployment behind the card housing, but sliding is easier.

A pair of pad connectors 90, 92 are mounted on the mother board, by placing the connectors in a slot 94 in the mother board. Contacts 96 of the pad connectors have terminal ends that are soldered to terminals 98 on the mother board, and have pad-engaging ends 100 that project upward. The contact ends 100 are designed to engage the contact pads 72 on the daughter board, only when the daughter board is in its fully deployed position. Then, electrical power passes into the IC card through the front card connector 20 and signals past out of the IC card through the front connector 20 to the electronic equipment to authenticate or not authenticate the fingerprint. Circuitry 106 that includes the daughter board 60 and mother board 52, including any circuit components, electronically couples the fingerprint sensor 34 to the front connector 20, at least when the tray is deployed. Currents pass through the mother board 52 and electronic components 102 on the mother board, and through additional traces to the pad connectors 90, 92, and to the contact pads 72 on the daughter board. When the tray 30 is pushed forward F to its stowed position, contact is broken between the pad connectors 90, 92 and the daughter board contact pads 72.

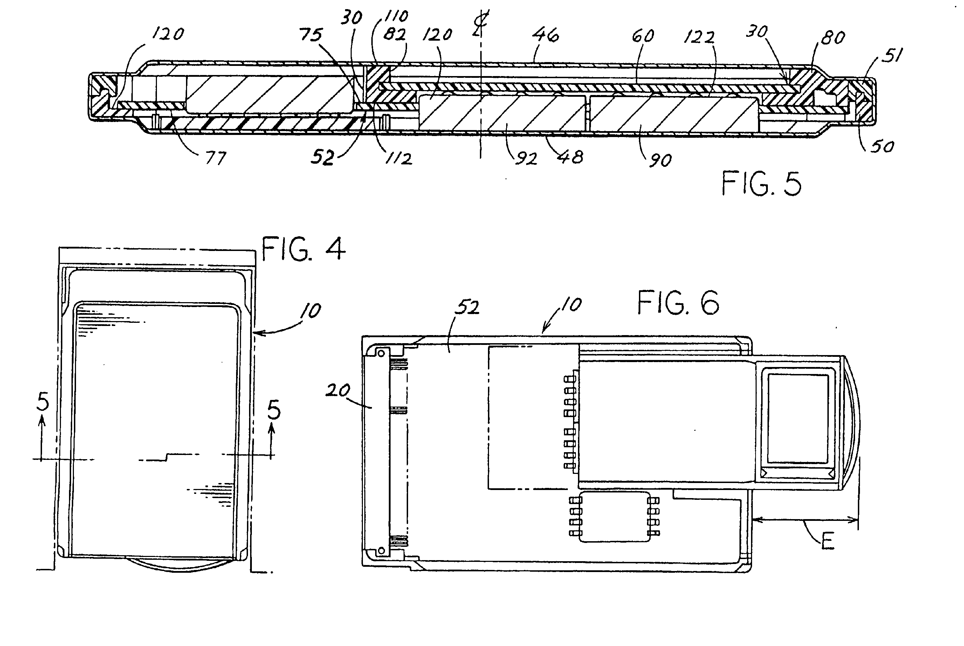

Fig. 5 shows details of the tray 30, showing how the daughter board 60 is supported on the right and left arms 80, 82 of the tray. It can be seen that each arm has an upper tray surface 110 that lies facewise adjacent to the sheet metal top part 46 and a lower tray surface 112 that lies facewise adjacent to the upper surface 75 of the mother board 52. Films of low friction material can lie between tray surfaces and the sheet metal and mother board to lower friction. The mother board also has a lower surface 77 which is supported on a surface 120 of the card housing. Thus, the tray is restricted in vertical movement by the upper sheet metal cover part 46 and by the mother board 52. Each of the guide arms 80, 82 are restricted in sideward movement by the pad connectors 90, 92. The guide arms lie astride the connectors. It should be noted that the right guide arm 80 is further restricted from rightward sideward movement by the plastic pieces 50, 51 of the card housing sides.

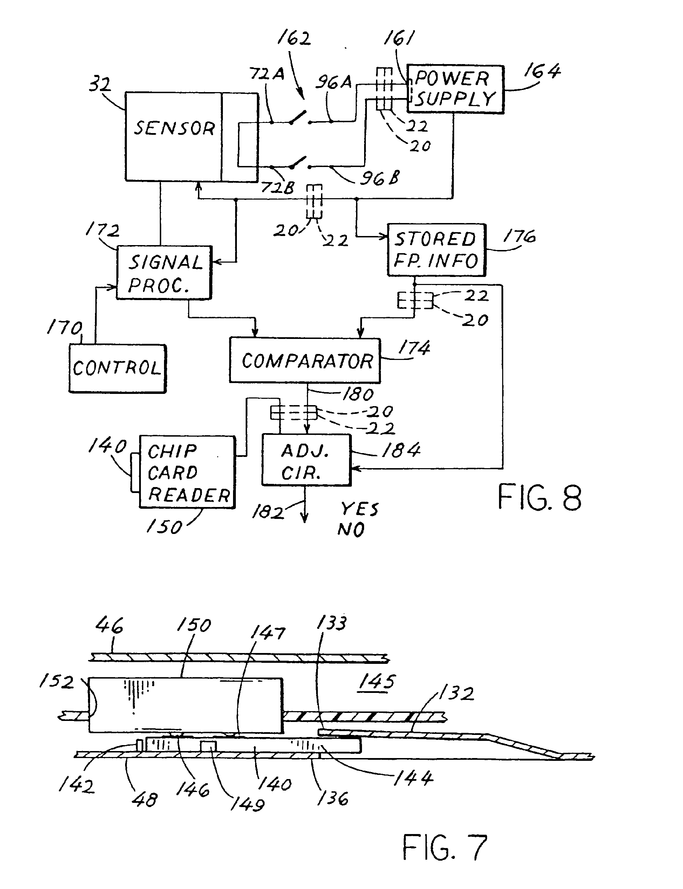

Fig. 3 shows that the lower sheet metal part 48 of the housing has a slit 130 forming a flap 132 with sides extending in longitudinal directions F, R and with a free front end 133. The flap is upwardly bent to lie in the space 145 (Fig. 7) between the top and bottom sheet metal parts 46, 48, to form an entrance 144 between the front 133 of the flap and a location 136 immediately forward of the flap. A chip card 140 can be inserted forwardly and at a slight upward incline through the entrance 144, until a front end of the chip card engages a stop 142. Both the stop 142 and slide guides 149 are formed by tabs cut in the sheet metal part 48. In the fully inserted position of the chip card, contact pads 147 on the chip card are engaged by pad-engaging ends 146 of a pad connector 150. It is noted that the pad connector 150 lies in a slot 152 of the mother board, but its pad-engaging contact ends 146 are at the bottom of the pad connector instead of at its top.

The chip card 140 of Fig. 3, which is sometimes referred to as a SIM card, can be installed only when the IC card is out of the slot in the electronic device. The purpose of the chip card is to provide at least partial authentication of the user. A fingerprint of an individual can be identified by detecting the presence and location of a number of deltas (where three fingerprint ridge lines almost come together and form a delta between them) in relation to the core (the center of the fingerprint impression). Other characteristics such as the distance between ridges, etc., can be detected. If only the fingerprint of the person (and the name that he/she types into the computer) are to be used to authenticate the person, then the program which analyzes the output of the fingerprint sensor may require a relatively high correlation of the stored fingerprint characteristics to those detected. However, wear of the person's finger, oil on the sensor, etc., can reduce the number of identifying characteristics that are detected. Applicant constructs the IC card so that if a chip card 140 is present, which contains the proper code identifying a person, then only a minimum number of fingerprint characteristics have to be detected to provide authentification. Also, the presence of the chip may avoid having to type in the person's name. If the chip card is not present, then a greater number of fingerprint characteristics must be detected. Alternatively, low correlation and absence of a chip card may authorize only lower level operation. Fig. 3 shows two contacts 96A, 96B of the frontmost row of contacts of the pad connectors. When these contacts 96A, 96B are connected to corresponding pads 72A, 72B on the daughter board, a trace 160 closes a switch. Fig. 8, which is a simplified view of one example of a circuit arrangement of the IC card, shows the pads 72A, 72B and contacts 96A, 96B as a switch 162, that operates a control 161 of a power supply 164. Only when the switch 162 is closed, is electricity supplied from the power supply 164 to the sensor 32 and other circuitry. A control 170 controls a signal processor 172 to process signals from the sensor and deliver them through the daughter board pads and the pad connector to a comparator circuit 174 that is controlled by software. For example, the processor 172 may sense each of 40,000 pixels of the sensor at one microsecond intervals so the entire sensor is scanned in less than 1/10th second. Stored fingerprint information from a circuit 176 is also fed to the comparator 174, which delivers an output on line 180 that represents the number of characteristics that the sensed fingerprint has in common with the stored fingerprint information in circuit 176. The output on line 180 is delivered to an adjustment circuit 184.

If there is no chip card present, then a high degree of fingerprint correlations is required before a yes signal on output line 182 is delivered; a yes signal indicates that the person is authorized to operate the electronic device at the highest level. However, if the chip card 140 is present in the chip card reader formed by the connector 150 and properly identifies the person, then only a lower number of fingerprint correlations is required before the circuit 184 provides a yes. It is preferred that the signal processor 172 be located on the daughter board so it is close to the sensor 32 and many connections are easily made. The comparator 174 and other circuitry can be located on the mother board or in the electronic device that has the slot that receives the IC card. The circuitry requires subcircuits such as amplifiers, filters, etc. The card front connector 20 and the electronic equipment connector 22 are shown, to indicate what circuitry is preferably in the card and what is in the electronic equipment for the particular circuit of Fig. 8.

Referring again to Figs. 1 and 2, it can be seen that the tray 30 has a small handle 200 that projects rearwardly from the rear end 24 of the housing card. The handle 200 projects rearwardly by only 3mm or 4mm so it can fit into a slot of an electronic device and a cover can be closed over the slot. The handle has an upwardly-opening recess 202 into which a person can place his/her fingernail to grasp the tray and pull it out. When pulled out (the tray slides by over 10mm) to the deployed position, the tray projects a distance E of about 24mm rearward of the rear end 24 of the card housing.

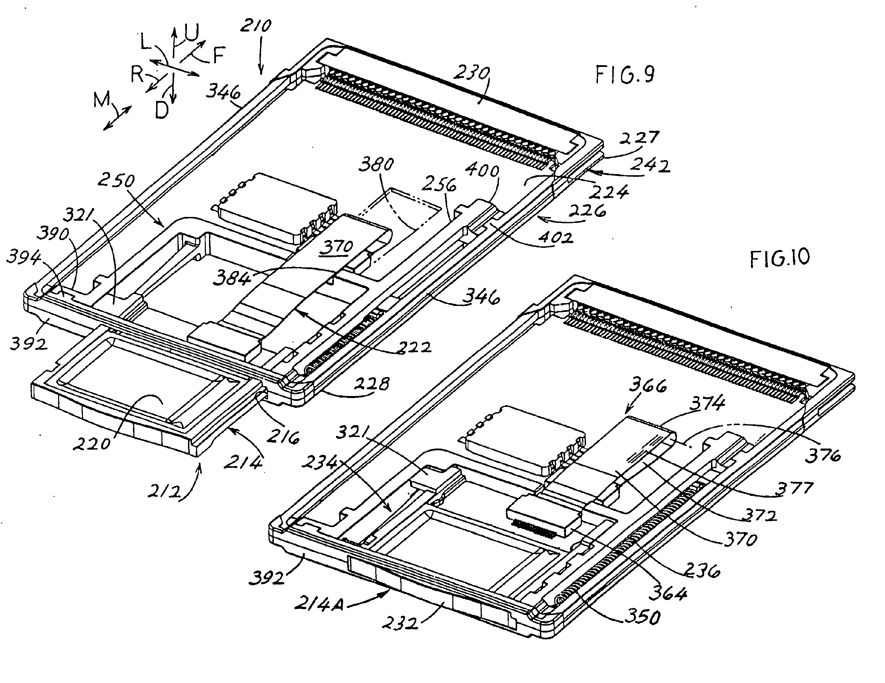

Fig. 9 illustrates an electronic device 210 of a second embodiment of the invention, which is also a Type II IC card. The IC card has a tray assembly 212 with a tray 214 that can slide along a slot 216, between the deployed position shown at 214 in Fig. 9, and the stowed position shown at 214A in Fig. 10. In the deployed position of Fig. 9, an electronic component 220 which is a fingerprint sensor that lies on a rear portion of the tray, is exposed for a person to lay a finger on. The output of the fingerprint sensor component 220 is delivered through an electrical connector arrangement 222 to a mother board 224 that is fixed to a housing 226 of the electronic device. The housing has front and rear ends 227, 228 spaced in longitudinal directions M and has laterally L opposite sides 346. For an IC card electronic device, signals from the fingerprint sensor component 220 are delivered (or processed data based on it is delivered) through a front connector 230 to electronic apparatus such as a computer.

When the tray is in the stowed position 214A of Fig. 10, the tray can be moved to the deployed position by a person pushing forwardly against a rear surface 232 of the tray. A double click mechanism 234 then releases the tray so it can slide rearward, and a tension spring 236 moves the tray rearward to the deployed position.

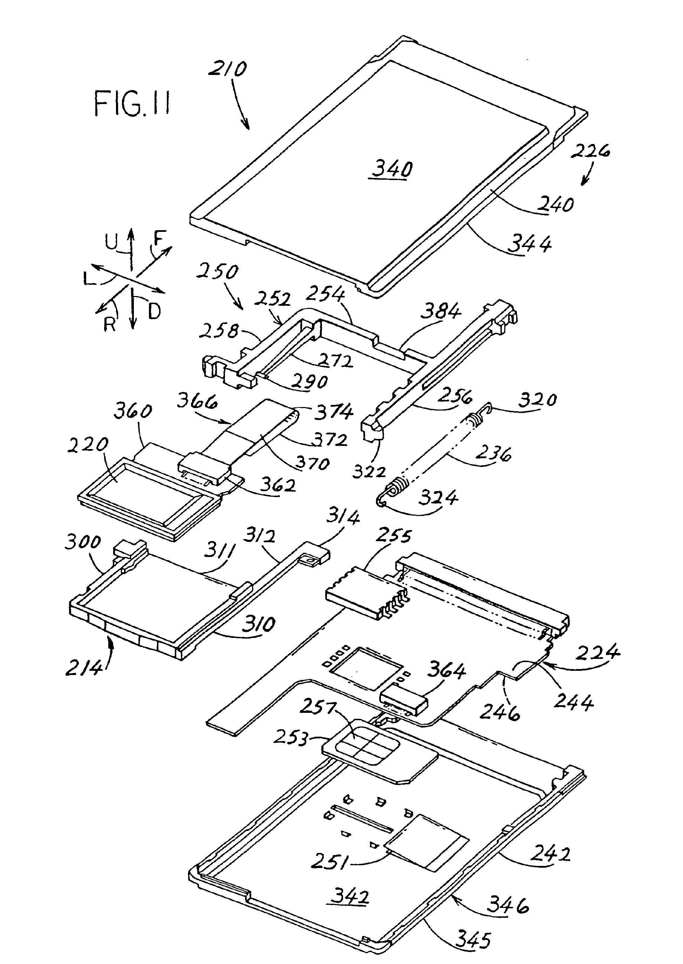

Fig. 11 shows that the electronic device includes top and bottom cover portions 240, 242 that form much of the housing 226. The mother board 224, which has top and bottom surfaces 244, 246, lies on the bottom cover portion and is fixed in place thereon. It is noted that in the particular device illustrated, the bottom cover portion has an opening 251 for receiving a SIM smart card, or chip card 253, and that a connector 255 mounted on the mother board has contacts that engage pads 257 on the SIM card.

A tray guide 250 is mounted in the housing, to provide much of the guiding of the tray, and to perform other functions. The tray guide includes a largely U-shaped holder 252 with a base 254 and with a pair of legs 256, 258 extending rearwardly R from opposite sides of the base. The tray 214 has opposite sides that fit between the legs 256, 258 of the holder.

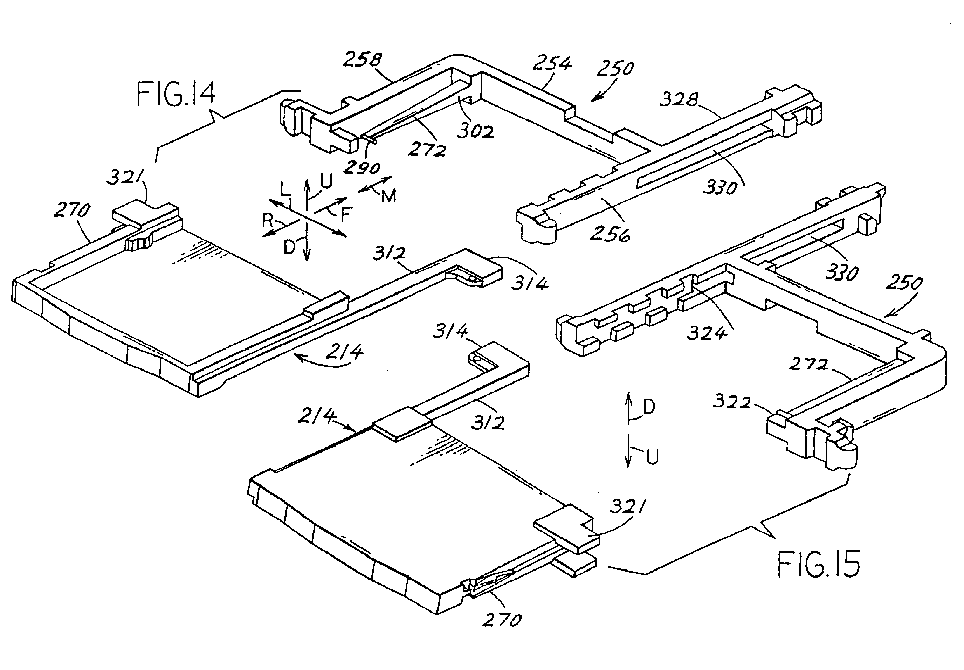

Figs. 14 and 15 show that the double click mechanism includes a cam element 270 and a cam follower element 272. The cam element is well known, and as shown in Fig. 17, includes a groove 274 and a divider 276 that divides the groove into two diverging portions 280, 282 and a rear connecting groove portion 284. The cam follower includes a follower part 290 in the form of a pin that rides along the groove 274. The first time that the tray 214 is pushed forward by pushing against the cam and tray rear surface 232, the follower part 290 moves along one of the groove parts 282. When the tray is no longer pushed forward, the spring holds the follower part against a surface 292. A second forward push against the cam rear surface 232 results in the follower part 290 being diverted to the other groove part 280, while allowing the tray to move a considerable distance such as 24 millimeters (mm) rearward R to its deployed position.

The cam element 270 is formed by molding it into a side 300 of the tray. Fig. 14 shows that the cam follower element 272, whose follower part 290 must move up and down, is formed by a longitudinally M elongated and vertically resilient beam. The beam of the cam follower element has a front end 302 molded integrally with the rest of the tray guide, near an intersection of the leg 258 with the base 254. By forming the follower element 272 as an integral part of the tray guide, applicant avoids the need for a separate follower element and for means for pivotally mounting the follower element on the housing or tray guide.

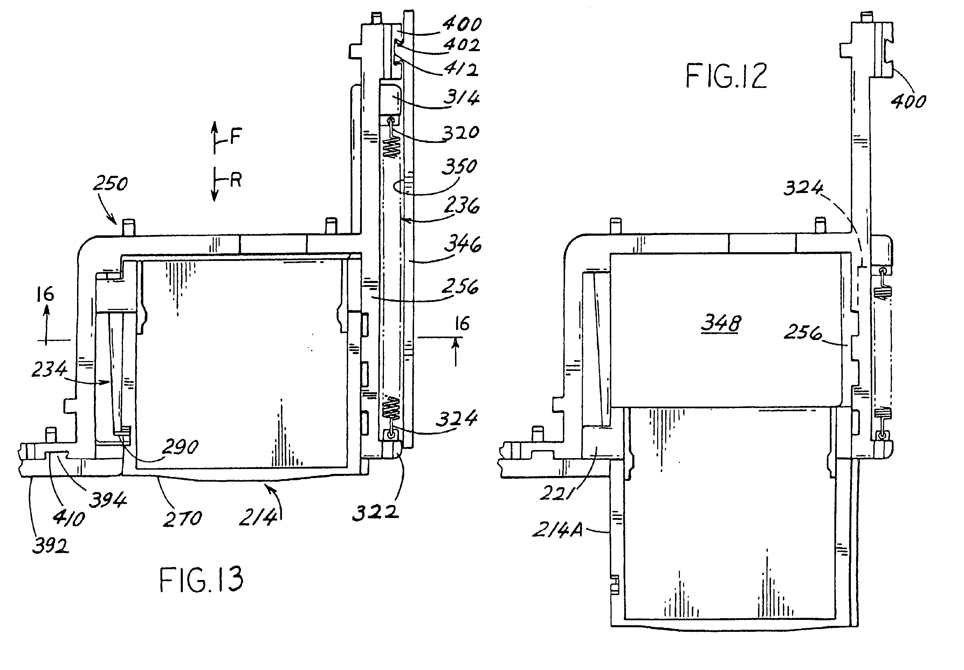

Fig. 11 shows that the tray 214 has a second side 310, and has a forwardly-projecting arm 312 that projects forwardly from the side 310 of the fingerprint component holder 311 of the tray. The arm 312 has a front end forming a front spring mount 314. The tension spring 236 has a front end 320 that is attached to the front spring mount. The tray guide 250 has a rear spring mount 322 at the rear end of its leg 256, and the spring has a rear end 324 that mounts on the rear spring mount 322. Fig. 13 shows the spring 236 fully expanded in length and held between the spring mount 314 on the tray and the spring mount 322 on the tray guide. The spring tends to pull the tray 214 rearward R, but the engagement of the cam follower part 290 with the cam element 270 prevents such forward movement until the tray is pushed inward slightly, as by about 1 mm. After the tray has been pushed forward slightly, so the double click mechanism 234 has released the tray to move rearward, the tray moves rearward to the deployed position 214A of Fig. 12. As shown in Fig. 9, when the tray reaches its deployed position, projections 321 at the front end of the tray abut a rear wall 392 of the housing. At the same time, the spring mount 314 (Fig. 15, which is upside-down) on the tray abuts another stop 324. Fig. 14 shows that the tray guide 250 has a forwardly-projecting arm-guide leg 328 with a slot or passage 330, and that the spring mount 314 at the front of the spring arm 312 projects laterally L through the passage to project laterally from leg 328. The passage 330 helps to closely guide the spring arm 312 to prevent up or down deflection of the spring mount 314 under the tension force of the spring. The spring holder arm 312 is wider in a lateral direction than its thickness in a vertical direction, so guidance by the walls of the passage 330 in the leg 328 is especially useful.

The top and bottom cover portions shown in Fig. 11 at 240 and 242, each includes a sheet metal portion 340, 342 and plastic side beams 344, 345 at opposite sides of each portion, with the side beams 344, 345 being sonically welded together to close the cover around the mother board and other parts. As shown in Fig. 13, the side 346 of the housing is spaced from the tray guide first or rightmost leg 256 by a distance that is slightly wider than the diameter of the tension spring 236. As a result, the spring lies in an isolated area 350 between a housing side wall and a tray guide leg 256. The isolated area lies on a side of the tray leg 256 opposite the space 348 that receives the tray. Since the spring is a moving part that can vibrate and that has numerous spring turns that can rub or catch against other parts, the confinement to an isolated area avoids damage to or from the spring.

Fig. 11 shows that the fingerprint sensor component 220 is mounted on a daughter board 360, and that a ribbon or flexible cable connector 362 is mounted on the daughter board. Another flexible cable connector 364 is mounted on the mother board. A ribbon cable or flat flexible cable 366 extends between the two connectors 362, 364. The flat flexible cable 366 has upper and lower cable parts 370, 372 that each lies in substantially a horizontal plane (that is normal to the vertical directions U, D) and that are connected by a substantially 180° bend 374. As shown in Figs. 9 and 10, the bent cable portion is bent about a horizontal axis 376 that extends laterally L. When the tray is deployed, the upper cable part 370 grows in length while the lower cable part shortens in length, but they always remain largely planar. The flat flexible cable has a plurality of very thin conductors 377, so the bend 374 can have a small height such as 2 mm without being permanently deformed. If the bottom cover portion does not have a slot for receiving a SIM card, a slot indicated at 380 can be formed in the mother board to provide for a larger radius of curvature at the bend 374. It is noted that for a fingerprint component 220, the component has numerous surface mount contacts at its lower end that are soldered to traces on the daughter board, with the traces extending to the daughter board cable connector 364.

Fig. 11 shows that the base 254 of the tray guide has a slot 384 through which the flat flexible cable extends. This allows the rest of the base to extend up against the sheet metal portion 340 of the top cover portion for maximum thickness of the tray guide (except at the slot) and to help support the sheet metal portion.

The tray guide 250 is preferably mounted directly to the housing 226 of the electronic device. The tray guide has a rear end that includes a lateral side extension 390 (Fig. 9) that extends the tray rear end across the entire width of the device between its housing opposite sides 346, thereby trapping the rear of the tray guide. A separate rear wall 392 of the housing has a lug 394 that fits into a corresponding recess at the extension 390 on the tray guide, and these parts can be locked together. Similarly, the forwardly-elongated arm guide leg 256 of the tray guide has an extension 400 that receives a lug 402 projecting inwardly from the housing side 346. Fig. 13 shows that the slots 410, 412 are slightly undercut and the lugs have corresponding enlarged ends. This allows the lugs 394, 402 to lock to the housing by merely pressing down the tray guide into the bottom cover portion. Of course, the lugs can be formed on the extensions and slots formed in the housing, but this reduces the width of the already thin housing walls.

The electronic device 210 shown in Fig. 9 is assembled by first assembling the tray 214 to the tray guide 250 and then moving the tray guide down into the bottom cover portion 242 until the tray guide locks to the lugs 394, 402. Then, the mother board 224 is slid rearwardly into place around the tray guide. The flat flexible cable 366 will already have been attached to one of the connectors such as the one on the mother board, and is then attached to the other connector such as the one on the daughter board. Finally, the top cover portion 240 is placed over the bottom cover portion and the plastic parts at the sides 344, 346 and at portions of the front and rear ends are ultrasonically welded together.

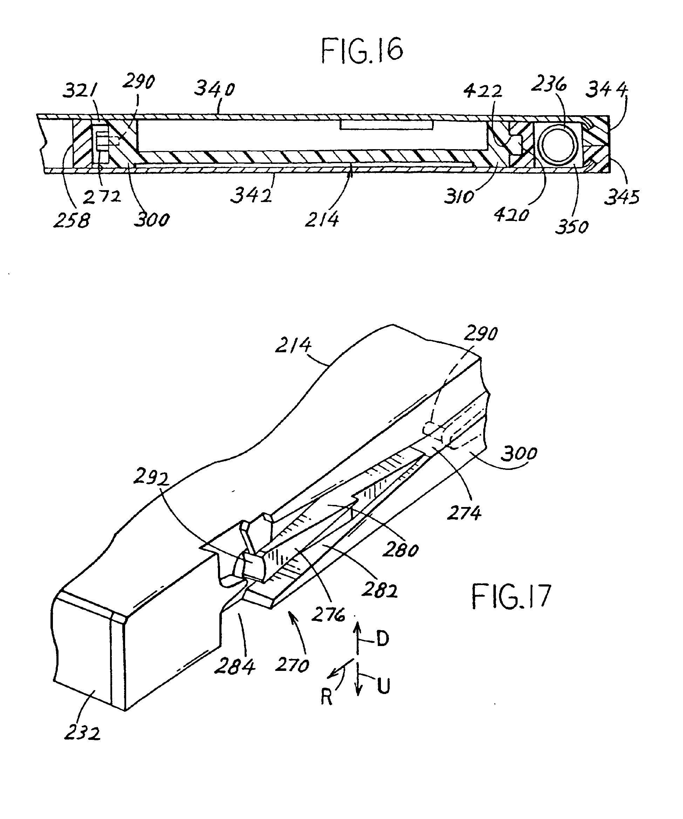

Fig. 16 shows that the tray 214 is guided against vertical movement by the sheet metal walls 340, 342 of the top and bottom cover portions that engage at least the left side 300 of the tray. The right side 310 of the tray is guided in a tongue 420 and groove 422 sliding connection. The left side is guided only by abutment of the tray left side 300 at projections 321 that lie above and below the cam follower element 272. A tongue-and-groove joint cannot be readily provided on the left side because of the follower element 272. The tongue-and-groove connection at the right side 310 of the tray helps prevent the tray from deflecting downward in its deployed position.

While terms such as "upper", "lower", etc. have been used to describe the invention as it is illustrated, it should be understood that the electronic device and its parts can be used in any orientation with respect to the Earth. Also, the tray can extend from any wall of the electronic device, which wall can be considered to be a rear part.

Thus, the invention provides an electronic device, and especially an IC card with a component and especially a sensor such as a fingerprint sensor, that can be used when the card is fully inserted in a slot of equipment such as a computer, and which is protected when not in use. The electronic device has a tray assembly that includes a tray that can slide rearward and forward between a stowed position where a component such as a sensor on the tray is protected and a deployed position where it is exposed, in an easily installed, easily operated, and rugged construction. The tray assembly includes a spring that urges the tray rearwardly towards its deployed position, and a double click mechanism that latches the tray in the stowed position while releasing it when the tray is pushed forward slightly. The double click mechanism includes a cam element and a cam follower element in the form of an elongated beam that can deflect, where one element is formed integrally with a molded polymer tray and the other element is formed integrally with a molded polymer tray guide that guides the tray in sliding movement. The spring that urges the tray rearward is a tension spring with a spring forward end connected to a forwardly-projecting arm on the tray, and with a spring rear end mounted on the tray guide. The spring can be enclosed in an isolated area lying between one side of the housing and a side of the tray guide. A daughter board on the sliding tray is connected to a mother board lying in a fixed position on the housing. In one arrangement such connection is made through a flat flexible cable with horizontal upper and lower cable portions that are connected by a substantially 180° bend in the cable. In another arrangement, contacts on the underside of the daughterboard can slide into engagement with contacts of a connector on the motherboard. The tray guide can be mounted by forming it with laterally spaced undercut slots that closely receive lugs formed in plastic beams of the housing. The IC card can be provided with means for receiving a chip card that helps authenticate the owner. A sheet metal cover of an IC card housing has a flap cut in it, forming an entrance through which the chip card can be inserted until pads on the chip card engage contacts of a connector.

## Claims

1. An IC Card that includes a mother board (224) having top and bottom surfaces (244, 240), and a housing (226) which includes top and bottom cover portions (240, 242) that lie respectively above and below said mother board and that are mechanically connected to said mother board, said IC Card housing having longitudinally-spaced front and rear ends (227, 228) and laterally spaced opposite sides (346); with
a tray guide (250) mounted on said housing;
a tray (214) which is moveably mounted on said tray guide so said tray can move forward and rearward (R, F) between a stowed position (214) and a deployed position (214A);
an electronic component (220) that produces an electrical signal and that is mounted on said tray, with said component lying rearward of said housing rear end in said deployed position of said tray and lying within said housing in said stowed position of said tray;
a connecting arrangement (222) with a plurality of conductors (377) that electrically couple said tray to said mother board at least when said tray is in said deployed position; **characterized in, that**
said connecting arrangement includes a flat flexible and resilient cable (366) having upper and lower cable parts (370, 372) that each lies substantially in a plane (M) parallel to said motherboard, with said upper and lower cable parts joined by a substantially 180° bend (374) in said cable about a laterally-extending axis (376) that lies in a plane primarily parallel to said motherboard, and with one of said cable parts fixed and connected to said tray to connect to said component and with the other of said cable parts fixed and connected to said mother board,
said cable part is connected to said tray being moveable forward and rearward (F, R) as said 180° bend moves forward and rearward along a path primarily parallel to said mother board,
said cable parts are constructed so one of said cable parts shortens and the other one lengthens as said 180° bend moves along said path, and said IC Card having an unobstructed space along said path of said 180° bend.

2. The IC Card described in claim 1 wherein:
said tray guide (250) has a largely U-shaped part (252) with longitudinally extending legs (256, 258) having leg front ends and a base (254) connecting said leg front ends;
said base has a slot (384) and said cable extends through said slot.

3. The IC Card described in claim 1 or 2 wherein:
said try guide has at least a first leg (256)
said tray has a forwardly-projecting arm (312) with a front end forming a front spring mount (314) lying beside said first leg of said tray guide;
said first leg of said tray guide has a rear spring mount (322) lying directly rearward of said front spring mount;
a tension spring (236) having a front end (320) mounted on said front spring mount of said tray arm, and having a rear end (324) mounted on said rear spring mount.

4. The IC Card described in claim 3 wherein:
said tray guide has an arm-guide leg (328) projecting forwardly from said first leg and having a longitudinally-extending passage (330);
said front spring mount on said forwardly-projecting arm of said tray, projects laterally through said passage.

5. The IC Card described in claim 3 wherein:
said housing has laterally opposite sides (346), and forms an isolated area (350) between said tray guide first leg (256) and a first of said sides of said housing, and said spring lies in said isolated area and is enclosed between said top and bottom cover portions.

## Patentansprüche

1. IC-Karte, enthaltend eine Hauptplatine (224) mit einer oberen und einer unteren Oberfläche (244, 240) und ein Gehäuse (226), das einen oberen und einen unteren Abdeckungsabschnitt (240, 242) hat, die oberhalb bzw. unterhalb der Hauptplatine liegen und die mechanisch mit der Hauptplatine verbunden sind, wobei das IC-Kartengehäuse in Längsrichtung beabstandet ein vorderes und ein hinteres Ende (227, 228) und seitlich beabstandete entgegengesetzte Seiten (346) hat; mit einer Schubfachführung (250), die an dem Gehäuse montiert ist;
einem Schubfach (214), das an der Schubfachführung beweglich montiert ist, sodass das Schubfach vorwärts und rückwärts (F, R) zwischen einer eingezogenen Position (214) und einer Einsatzposition (214A) bewegbar ist;
einem elektronischen Bauelement (220), das ein elektrisches Signal erzeugt und das auf dem Schubfach montiert ist, wobei das Bauelement in der Einsatzposition des Schubfaches hinter dem hinteren Ende des Gehäuses liegt und in der eingezogenen Position des Schubfaches innerhalb des Gehäuses liegt;
einer Verbindungsanordnung (222) mit einer Vielzahl von Leitern (377), die das Schubfach mindestens dann, wenn das Schubfach in der Einsatzposition ist, mit der Hauptplatine elektrisch verbinden; **dadurch**
**gekennzeichnet, dass**
die Verbindungsanordnung ein flaches flexibles und elastisches Kabel (306) mit einem oberen und einem unteren Kabelteil (370, 372) umfasst, die jeweils im wesentlichen in einer Ebene (M) parallel zu der Hauptplatine liegen, wobei der obere und der untere Kabelteil durch eine Biegung (374) von im wesentlichen 180° in dem Kabel um eine seitlich verlaufende Achse (376) verbunden sind, die in einer zu der Hauptplatine hauptsächlich parallelen Ebene liegt, wobei einer der Kabelteile an dem Schubfach befestigt und mit diesem verbunden ist, um das Bauelement anzuschließen, und der andere Kabelteil an der Hauptplatine befestigt und mit dieser verbunden ist,
wobei der mit dem Schubfach verbundene Kabelteil vorwärts und rückwärts (F, R) bewegbar ist, während sich die 180°-Biegung entlang einem zu der Hauptplatine hauptsächlich parallelen Weg vorwärts und rückwärts bewegt,
welche Kabelteile so aufgebaut sind, dass sich einer der Kabelteile verkürzt und der andere verlängert, während sich die 180°-Biegung entlang dem Weg bewegt, und welche IC-Karte entlang dem Weg der 180°-Biegung einen hindernisfreien Raum hat.

2. IC-Karte nach Anspruch 1, bei welcher:
die Schubfachführung (250) einen weitgehend U-förmigen Teil (252) mit in Längsrichtung verlaufenden Schenkeln (256, 258) hat, die vordere Schenkelenden haben und eine die vorderen Schenkelenden verbindende Basis (254);
die Basis einen Schlitz (384) hat und das Kabel durch den Schlitz verläuft.

3. IC Karte nach Anspruch 1 oder 2, bei welcher:
die Schubfachführung mindestens einen ersten Schenkel (256) hat;
das Schubfach einen nach vorne vorspringenden Arm (312) mit einem vorderen Ende hat, das eine vordere Federaufnahme (314) bildet, die neben dem ersten Schenkel der Schubfachführung liegt;
der erste Schenkel der Schubfachführung eine hintere Federaufnahme (322) hat, die direkt hinter der vorderen Federaufnahme liegt;
eine Zugfeder (236) ein an der vorderen Federaufnahme des Schubfacharmes befestigtes vorderes Ende (320) und ein an der hinteren Federaufnahme befestigtes hinteres Ende (324) hat.

4. IC-Karte nach Anspruch 3, bei welcher:
die Schubfachführung einen Armführungsschenkel (328) hat, der von dem ersten Schenkel nach vorne vorspringt und einen in Längsrichtung verlaufenden Kanal (330) hat;
die vordere Federaufnahme an dem nach vorne vorspringenden Arm des Schubfaches seitlich durch den Kanal vorspringt.

5. IC-Karte nach Anspruch 3, bei welcher:
das Gehäuse seitlich einander gegenüberliegende Seiten (346) hat und
einen isolierten Bereich (350) zwischen dem ersten Schenkel der Schubfachführung (256) und einer ersten der Seiten des Gehäuses bildet, und die Feder in dem isolierten Bereich liegt und zwischen dem oberen und dem unteren Abdeckungsabschnitt eingeschlossen ist.

## Revendications

1. Carte à circuits intégrés qui inclut une carte-mère (224) ayant une surface de dessus et une surface de dessous (244, 240) et un boîtier (226) qui inclut une portion de couverture supérieure et une portion de couverture inférieure (240, 242) qui sont situées respectivement au-dessus et au-dessous de ladite carte-mère et qui sont mécaniquement reliées à ladite carte-mère, ledit boîtier de carte à circuits intégrés ayant une extrémité antérieure et une extrémité postérieure longitudinalement espacées (227, 228) et des côtés opposés (346) latéralement espacés ; comprenant
un guide de plateau (250) monté sur ledit boîtier ;
un plateau (214) qui est monté de façon mobile sur ledit guide de plateau de telle manière que ledit plateau peut se déplacer vers l'avant et vers l'arrière (R, F) entre une position escamotée (214) et une position déployée (214A) ;
un composant électronique (220) qui produit un signal électrique et qui est monté sur ledit plateau, ledit composant étant disposé en arrière de ladite extrémité postérieure du boîtier dans ladite position déployée dudit plateau, et étant disposé à l'intérieur dudit boîtier dans ladite position escamotée dudit plateau ;
un agencement de connexion (222) avec une pluralité de conducteurs (377) qui couple électriquement ledit plateau à ladite carte-mère au moins lorsque ledit plateau est dans ladite position déployée; **caractérisée en ce que**
ledit agencement de connexion inclut un câble plat flexible et élastique (366) ayant une partie de câble supérieure et une partie de câble inférieure (370, 372), qui sont disposées chacune sensiblement dans un plan (M) parallèle à ladite carte-mère, ladite partie de câble supérieure et ladite partie de câble inférieure étant jointes par un coude sensiblement à 180° (374) dans ledit câble autour d'un axe s'étendant latéralement (376) qui est disposé dans un plan principalement parallèle à ladite carte-mère, et l'une desdites parties de câble étant fixée et connectée audit plateau pour être connectée audit composant, et l'autre desdites parties de câble étant fixée et connectée à ladite carte-mère,
ladite partie de câble est connectée audit plateau en étant mobile vers l'avant et vers l'arrière (F, R) lorsque ledit coude à 180° se déplace vers l'avant et vers l'arrière le long d'un trajet principalement parallèle à ladite carte-mère,
lesdites parties de câble sont ainsi construites que l'une desdites parties de câble se raccourcit et l'autre s'allonge lorsque ledit coude à 180° se déplace le long dudit trajet, et ladite carte à circuits intégrés disposant d'un espace sans obstruction le long dudit trajet dudit coude à 180°.

2. Carte à circuits intégrés selon la revendication 1, dans laquelle :
ledit guide de plateau (250) comprend une partie largement en forme de U (252) avec des branches s'étendant longitudinalement (256, 258) ayant des extrémités antérieures de branche, et une base (254) qui relie lesdites extrémités antérieures de branche ; et
ladite base présente une fente (384) et ledit câble s'étend à travers ladite fente.

3. Carte à circuits intégrés selon la revendication 1 ou 2, dans laquelle :
ledit guide de plateau comprend au moins une première branche (256),
ledit plateau comprend un bras en projection vers l'avant (312) avec une extrémité antérieure formant une monture de ressort antérieure (314) située à côté de ladite première branche dudit guide de plateau ;
ladite première branche dudit guide de plateau comprend une monture de ressort postérieure (322) située directement en arrière de ladite monture de ressort antérieure ;
un ressort de traction (236) ayant une extrémité antérieure (320) montée sur ladite monture de ressort antérieure dudit bras du plateau, et ayant une extrémité postérieure (324) montée sur ladite monture de ressort postérieure.

4. Carte à circuits intégrés selon la revendication 3, dans laquelle :
ledit guide de plateau comprend une branche guide-bras (328) en projection vers l'avant depuis ladite première branche et ayant un passage (330) s'étendant longitudinalement ; et
ladite monture de ressort antérieure sur ledit bras, en projection vers l'avant dudit plateau, se projette latéralement à travers ledit passage.

5. Carte à circuits intégrés selon la revendication 3, dans laquelle :
ledit boîtier comprend des côtés latéralement opposés (346) et forme une zone isolée (350) entre ladite première branche (256) du guide de plateau et un premier desdits côtés dudit boîtier, et ledit ressort est disposé dans ladite zone isolée et est enfermé entre ladite portion de couverture supérieure et ladite portion de couverture inférieure.
